# EUROPEAN PATENT APPLICATION

(11) **EP 4 068 773 A1**
(43) Date of publication of application: **05.10.2022**
(21) Application number: 20897057.4
(22) Date of filing: 02.12.2020
(51) Int. Cl.: H04N 13/302, H04N 13/305, H04N 13/366

(54) **METHOD FOR REALIZING 3D IMAGE DISPLAY, AND 3D DISPLAY DEVICE**

(30) Priority: 05.12.2019 CN 201911231397
(71) Applicant: Beijing Ivisual 3D Technology Co., Ltd., Beijing 100055 (CN); Visiotech Ventures Pte. Ltd., Singapore 188979 (SG)
(72) Inventor: DIAO, Honghao, Beijing 100055 (CN); HUANG, Lingxi, Singapore 188979 (SG)
(74) Representative: Manitz Finsterwald Patent- und Rechtsanwaltspartnerschaft mbB
(86) International application number: PCT/CN2020/133331
(87) International publication number: WO 2021/110037

(57) **Abstract**

The present application relates to a 3D display technology, and discloses a method for realizing 3D image display, comprising: detecting a posture change of a 3D display device, wherein the 3D display device comprises a multi-viewpoint 3D display screen, the multi-viewpoint 3D display screen comprises a plurality of composite pixels and a plurality of spherical gratings covering the plurality of composite pixels, each composite pixel of the plurality of composite pixels comprises a plurality of composite subpixels, and each composite subpixel of the plurality of composite subpixels comprises a plurality of subpixels corresponding to a plurality of viewpoints; and when detecting the posture change of the 3D display device, adjusting a display orientation of a displayed 3D image so that the 3D image is kept in an initial display orientation before the posture change of the 3D display device. The present disclosure solves the problem that an electronic device cannot display a suitable picture after posture adjustment. The present application further discloses the 3D display device, a computer-readable storage medium, and a computer program product.

## Description

The present application claims priority to the Chinese Patent Application with an application number of 2019112313974 and a title of "Method for Realizing 3D Image Display, and 3D Display Device", filed to China National Intellectual Property Administration on December 5th, 2019, the disclosures of which are hereby incorporated by reference.

### TECHNICAL FIELD

The present application relates to the technical field of 3D display, and for example, relates to a method for realizing 3D image display, and a 3D display device.

### BACKGROUND

At present, 3D display devices refract light emitted by pixels through gratings to achieve a 3D display effect.

In the process of realizing embodiments of the present disclosure, at least the following problems are found in the related technologies: a display device is configured to display a suitable 3D effect in one posture, but does not have the function of displaying the 3D effect in another posture.

### Summary

In order to provide a basic understanding of some aspects of the disclosed embodiments, a brief summary is given below. The summary is not intended to be a general comment, nor to identify key/important components or describe the scope of protection of the embodiments, but to be a preface to the following detailed description.

Embodiments of the present disclosure provide a method for realizing 3D image display, a 3D display device, a computer-readable storage medium, and a computer program product, to solve the technical problem that a 3D display device cannot display a 3D image after posture adjustment.

In some embodiments, a method for realizing 3D image display is provided, comprising: detecting a posture change of a 3D display device, wherein the 3D display device comprises a multi-viewpoint 3D display screen, the multi-viewpoint 3D display screen comprises a plurality of composite pixels and a plurality of spherical gratings covering the plurality of composite pixels, each composite pixel of the plurality of composite pixels comprises a plurality of composite subpixels, and each composite subpixel of the plurality of composite subpixels comprises a plurality of subpixels corresponding to a plurality of viewpoints; and when detecting the posture change of the 3D display device, adjusting a display orientation of a displayed 3D image so that the 3D image is kept in an initial display orientation before the posture of the 3D display device changes.

In some embodiments, detecting a posture change of a 3D display device comprises: detecting a rotational angular velocity of the 3D display device, and determining the posture change of the 3D display device according to the rotational angular velocity; and adjusting a display orientation of a 3D image comprises: rotating the display orientation of the 3D image in a plane, in which the 3D image is located, so that the 3D image is kept in an initial display orientation before the posture of the 3D display device changes.

In some embodiments, the posture of the 3D display device comprises at least one of: a transverse screen display posture, a vertical screen display posture, and an oblique screen display posture.

In some embodiments, a first posture of the 3D display device before the posture change comprises: any one of the transverse screen display posture, the vertical screen display posture, and the oblique screen display posture; a second posture of the 3D display device after the posture change comprises: any one, different from the first posture, of the transverse screen display posture, the vertical screen display posture, and the oblique screen display posture; and adjusting a display orientation of a 3D image comprises: rotating the 3D image so that the 3D image is kept in an initial display orientation corresponding to the first posture.

In some embodiments, when any one of the first posture and the second posture is the oblique screen display posture, adjusting a display orientation of a 3D image further comprises: displaying the 3D image in a full screen display mode.

In some embodiments, adjusting a display orientation of a 3D image comprises: rotating the display orientation of the 3D image in a plane in which the 3D image is located, so that the 3D image is kept within an initial display orientation range, wherein the initial display orientation range comprises the initial display orientation.

In some embodiments, the method for realizing 3D image display further comprises: adjusting the display orientation of the 3D image according to a viewing orientation of a user, so that the display orientation of the 3D image coincides with the viewing orientation of the user.

In some embodiments, the viewing orientation of the user comprises: any one of a transverse viewing orientation, a vertical viewing orientation, and an oblique viewing orientation; and the method for realizing 3D image display further comprises: performing eye positioning for the user, and determining the viewing orientation of the user according to the obtained eye positioning data.

In some embodiments, adjusting a display orientation of a 3D image comprises: rendering corresponding subpixels in composite subpixels in the multi-viewpoint 3D display screen, based on the adjusted display orientation of the 3D image.

In some embodiments, rendering corresponding subpixels in composite subpixels in the multi-viewpoint 3D display screen comprises: rendering the subpixels, corresponding to the viewpoints, in each composite subpixel, based on the viewpoints corresponding to the subpixels in each composite subpixel after the posture change of the 3D display device.

In some embodiments, a plurality of subpixels in each composite subpixel are arranged in an i×j array, wherein subpixels in the i×j array of each composite subpixel correspond to i viewpoints before the posture change of the 3D display device; or subpixels in the i×j array of each composite subpixel correspond to j viewpoints after the posture change of the 3D display device.

In some embodiments, a 3D display device is provided, comprising: a processor, and a memory storing program instructions, wherein the processor is configured to implement the above method when executing the program instructions.

In some embodiments, a 3D display device is provided, comprising: a multi-viewpoint 3D display screen, comprising a plurality of composite pixels and a plurality of spherical gratings covering the plurality of composite pixels, wherein each composite pixel of the plurality of composite pixels comprises a plurality of composite subpixels, and each composite subpixel of the plurality of composite subpixels comprises a plurality of subpixels corresponding to a plurality of viewpoints; a posture detection apparatus, configured to detect a posture change of the 3D display device; and a 3D processing apparatus, configured to adjust a display orientation of a displayed 3D image based on the detected posture change of the 3D display device so that the 3D image is kept in an initial display orientation before the posture change of the 3D display device.

In some embodiments, the posture detection apparatus is configured to detect a rotational angular velocity of the 3D display device, and determine the posture change of the 3D display device according to the rotational angular velocity; and the 3D processing apparatus is configured to rotate the display orientation of a 3D image in a plane, in which the 3D image is located, so that the 3D image is kept in an initial display orientation before the posture change of the 3D display device.

In some embodiments, the posture of the 3D display device comprises at least one of: a transverse screen display posture, a vertical screen display posture, and an oblique screen display posture.

In some embodiments, a first posture of the 3D display device before the posture change comprises: any one of a transverse screen display posture, a vertical screen display posture, and an oblique screen display posture; a second posture of the 3D display device after the posture change comprises: any one, different from the first posture, of a transverse screen display posture, a vertical screen display posture, and an oblique screen display posture; and the 3D processing apparatus is configured to rotate the 3D image so that the 3D image is kept in an initial display orientation corresponding to the first posture.

In some embodiments, the 3D processing apparatus is configured to display the 3D image in a full screen display mode when any one of the first posture and the second posture is the oblique screen display posture.

In some embodiments, the 3D processing apparatus is configured to rotate the display orientation of a 3D image in a plane, in which the 3D image is located, so that the 3D image is kept within an initial display orientation range, wherein the initial display orientation range comprises the initial display orientation.

In some embodiments, the 3D processing apparatus is configured to adjust the display orientation of the 3D image according to a viewing orientation of a user, so that the display orientation of the 3D image coincides with the viewing orientation of the user.

In some embodiments, the viewing orientation of user comprises any one of: a transverse viewing orientation, a vertical viewing orientation, and an oblique viewing orientation; the 3D display device further comprises an eye positioning apparatus or an eye positioning data interface, configured to acquire eye positioning data; and the 3D processing apparatus is configured to determine the viewing orientation of the user according to the obtained eye positioning data.

In some embodiments, the 3D processing apparatus is configured to render composite pixels in the multi-viewpoint 3D display screen of the 3D display device based on the adjusted display orientation of the 3D image.

In some embodiments, the 3D processing apparatus is configured to render the subpixels, corresponding to the viewpoints in composite subpixels contained in the multi-viewpoint 3D display screen, based on the viewpoints corresponding to the subpixels in each composite subpixel after the posture change of the 3D display device.

In some embodiments, a plurality of subpixels in each composite subpixel are arranged in an i×j array, wherein subpixels in the i×j array of each composite subpixel correspond to i viewpoints before the posture change of the 3D display device; or subpixels in the i×j array of each composite subpixel correspond to j viewpoints after the posture change of the 3D display device.

The computer-readable storage medium provided by the embodiments of the present disclosure stores computer-executable instructions; and the computer-executable instructions are configured to implement the method for realizing 3D image display.

The computer program product provided by the embodiments of the present disclosure comprises computer programs stored on the computer-readable storage medium; the computer programs comprise program instructions; and when the program instructions are executed by a computer, the computer is allowed to implement the above method for realizing 3D image display.

The method for realizing 3D image display, the 3D display device, the computer-readable storage medium, and the computer program product provided by the embodiments of the present disclosure may achieve the following technical effects:
The 3D display device can display suitable 3D effects in different postures, and cannot be affected by the posture adjustment of the 3D display device.
The above general description and the following description are exemplary and explanatory only, and are not intended to limit the present application.

### DESCRIPTION OF DRAWINGS

One or more embodiments are illustrated by the corresponding drawings, and the illustrations and drawings do not limit the embodiments. Elements having the same reference numerals in the drawings are shown as similar elements, and the drawings are not intended to limit the scale, wherein:
Figs. 1A to 1C are structural schematic diagrams of a 3D display device according to embodiments of the present disclosure;
Fig. 2 is a schematic diagram of the correspondence between spherical gratings and composite subpixels according to an embodiment of the present disclosure;
Figs. 3A and 3B are schematic diagrams of the correspondence between composite subpixels and viewpoints in different postures of a 3D display device according to embodiments of the present disclosure;
Fig. 4 is a schematic diagram of arrangement of composite subpixels in composite pixels according to an embodiment of the present disclosure;
Fig. 5 is a structural schematic diagram of hardware of a 3D display device according to an embodiment of the present disclosure;
Fig. 6 is a structural schematic diagram of software of a 3D display device according to an embodiment of the present disclosure;
Fig. 7 is a schematic diagram of formats and contents of images contained in video frames of 3D video signals according to an embodiment of the present disclosure;
Figs. 8A and 8B are schematic diagrams of a 3D display device rendering subpixels in a first posture according to an embodiment of the present disclosure;
Figs. 9A and 9B are schematic diagrams of a 3D display device rendering subpixels in a second posture according to an embodiment of the present disclosure;
Fig. 10 is a flowchart of switching display of 3D images in a 3D display device according to an embodiment of the present disclosure; and
Fig. 11 is a structural schematic diagram of a 3D display device according to an embodiment of the present disclosure.

Reference numerals:
100: 3D display device; 110: multi-viewpoint 3D display screen; 120: processor; 121: register; 130: 3D processing apparatus; 131: buffer; 140: video signal interface; 150: eye positioning apparatus; 160: eye positioning data interface; 171: first posture playing region; 172: second posture playing region; 180: posture detection apparatus; 190: spherical grating; 200: 3D display device; 201: processor; 202: multi-viewpoint 3D display screen; 203: 3D processing apparatus; 204: video signal interface; 205: eye positioning apparatus; 206: shooting apparatus; 207: indicator; 208: motor; 209: button; 210: memory; 211: subscriber identity module (SIM) card interface; 212: external memory interface; 213: universal serial bus (USB) interface; 214: charging management module; 215: power management module; 216: battery; 217: register; 218: GPU; 219: codec; 220: sensor module; 221: proximity light sensor; 222: ambient light sensor; 223: pressure sensor; 224: air pressure sensor; 225: magnetic sensor; 226: gravity sensor; 227: gyro sensor; 228: acceleration sensor; 229: distance sensor; 230: temperature sensor; 231: fingerprint sensor; 232: touch sensor; 233: bone conduction sensor; 234: audio module; 235: loudspeaker; 236: receiver; 237: microphone; 238: earphone interface; 239: antenna; 240: mobile communication module; 241: antenna; 242: wireless communication module; 300: 3D display device; 310: memory; 320: processor; 330: bus; 340: communication interface; 400: composite pixel; 410: red composite subpixel; 420: green composite subpixel; 430: blue composite subpixel; 510: application program layer; 520: framework layer; 530: core class library and runtime; 540: kernel layer; 601: one of two images contained in video frames of a 3D video signal; and 602: one of two images contained in video frames of a 3D video signal.

### DETAILED DESCRIPTION

For more detailed understanding of characteristics and technical contents of embodiments of the present disclosure, the implementation of the embodiments of the present disclosure will be described in detail below with reference to the accompanying drawings, and the accompanying drawings are used for reference only, instead of limiting the embodiments of the present disclosure.

Embodiments of the present disclosure provide a 3D display device, comprising a multi-viewpoint 3D display screen (such as: a multi-viewpoint naked-eye 3D display screen), a posture detection apparatus, a 3D signal interface, and a 3D processing apparatus. The 3D display device has a plurality of viewpoints, and has viewpoints corresponding to postures based on the postures of the 3D display device.

The multi-viewpoint 3D display screen comprises a plurality of composite pixels and a plurality of spherical gratings. Each composite pixel comprises a plurality of composite subpixels. The plurality of composite subpixels are covered by the plurality of spherical gratings. In some embodiments, the composite subpixels and the spherical gratings are arranged in one-to-one correspondence. Each composite subpixel comprises a plurality of subpixels, for example, comprises a plurality of subpixels in the form of i×j array. In some embodiments, each composite subpixel comprises a plurality of homochromatic subpixels in the form of i×j array. In some embodiments, subpixels in the i×j array or homochromatic subpixels in the i×j array correspond to i first posture viewpoints in a first posture of the 3D display device and j second posture viewpoints in a second posture of the 3D display device. In some embodiments, i>3, and j≥3. The multi-viewpoint 3D display screen may define a first posture playing region of the 3D display device in the first posture and a second posture playing region of the 3D display device in a second posture. The first posture playing region and the second posture playing region may be the same or different, or overlapped in positions.

The posture detection apparatus is configured to detect a posture of the 3D display device, comprising: detecting a posture change of the 3D display device, or detecting a posture in which the 3D display device is, or detecting the both. The 3D signal interface is configured to receive 3D signals.

The 3D processing apparatus is configured to adjust the display of a 3D image based on the posture of the 3D display device or the posture change of the 3D display device or the both, so that a display orientation of the 3D image is kept in an initial display orientation before the posture change of the 3D display device. Thus, the display orientation of the 3D image may always be consistent with an orientation of the user.

In some embodiments, the 3D processing apparatus processes 3D signals to play the 3D images from 3D contents in the first posture playing region and the 3D images from the 3D contents in the second posture playing region. As for the user, display orientations of the 3D images played in the first posture playing region and the second posture playing region are consistent.

In embodiments of the present disclosure, the "posture" of the 3D display device is equivalent to the "orientation" of the 3D display device.

In some embodiments, the 3D processing apparatus is communicatively connected with the multi-viewpoint 3D display screen. In some embodiments, the 3D processing apparatus is communicatively connected with a driving apparatus of the multi-viewpoint 3D display screen. In some embodiments, the 3D processing apparatus is communicatively connected with the posture detection apparatus.

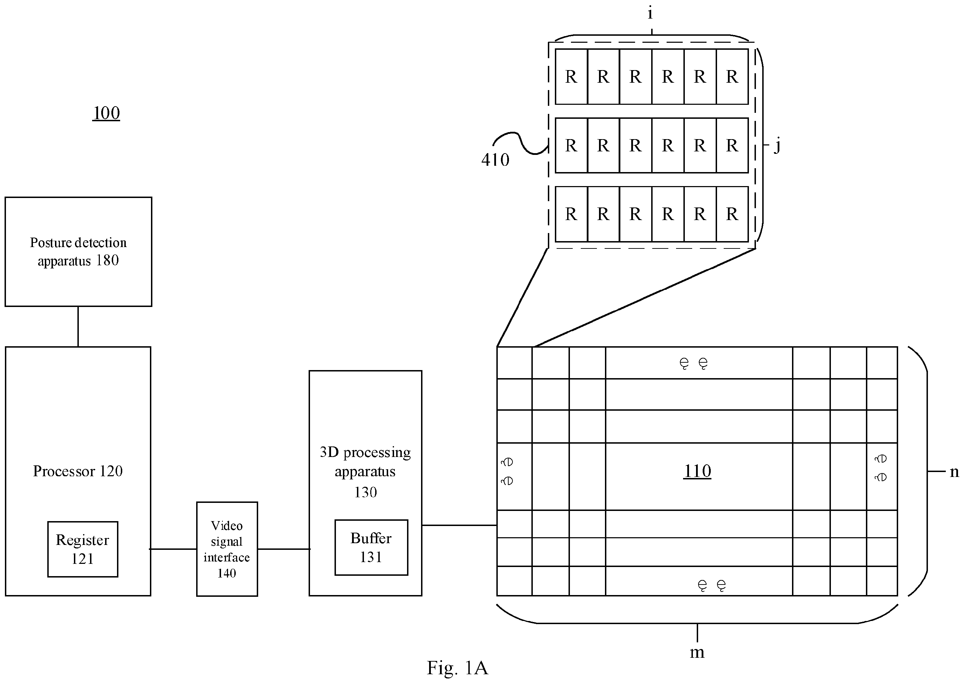

Fig. 1A shows a 3D display device 100 according to embodiments of the present disclosure. As shown in Fig. 1A, the 3D display device 100 comprises a multi-viewpoint 3D display screen 110, a 3D processing apparatus 130, a 3D signal interface (e.g., a video signal interface 140) configured to receive video frames of 3D signals such as 3D video signals, a processor 120, and a posture detection apparatus 180. In an embodiment shown in Fig. 1A, the multi-viewpoint 3D display screen 110 may comprise a display panel and gratings covering the display panel. The display panel may comprise m columns and n rows (m×n) of composite pixels and thus define a display resolution of m×n.

In some embodiments, each composite pixel comprises red composite subpixels composed of red subpixels in the i×j array, blue composite subpixels composed of blue subpixels in the i×j array, and green composite subpixels composed of green subpixels in the i×j array. Fig. 1A shows an example of a red composite subpixel 410 composed of red subpixels in the i×j array.

In embodiments of the present disclosure, each composite subpixel has corresponding subpixels corresponding to viewpoints. The plurality of subpixels of each composite subpixel are arranged in rows in a transverse direction of the multi-viewpoint 3D display screen; and colors of the plurality of subpixels in rows are the same. Because the multiple viewpoints of the 3D display device are roughly arranged along the transverse direction of the multi-viewpoint 3D display screen, when the user moves to make eyes be in different viewpoints, different subpixels, corresponding to the corresponding viewpoints, in each composite subpixel need to be rendered dynamically. Because the homochromatic subpixels of each composite subpixel are arranged in rows, a cross-color problem caused by persistence of vision can be avoided. In addition, due to refraction of the grating, a part of currently displayed subpixels may be seen at an adjacent viewpoint. However, through arrangement of subpixels with the same color in the same row, a problem of color mixing is absent even if a part of the currently displayed subpixels are seen.

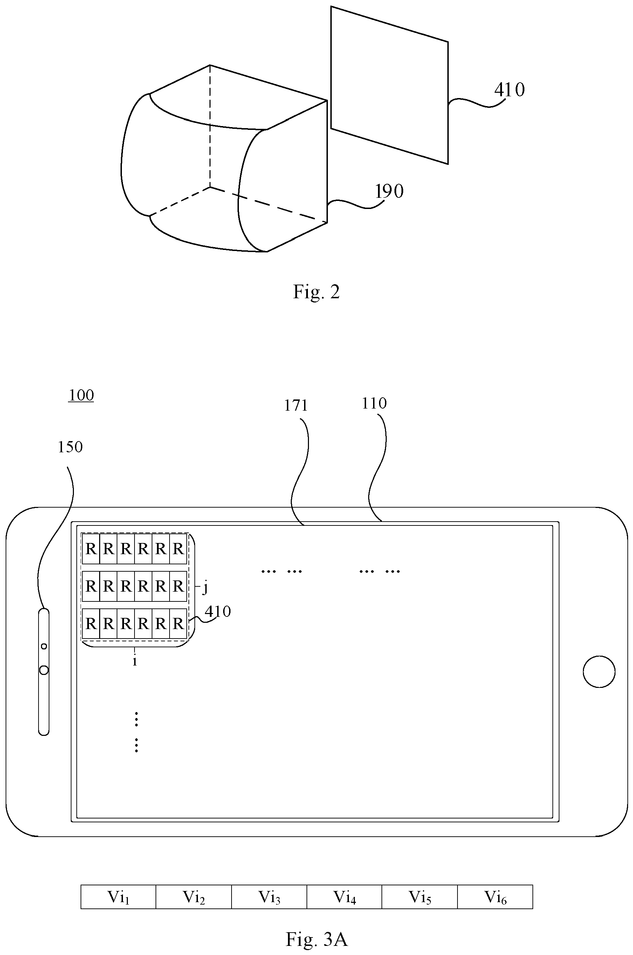

In some embodiments, the gratings comprise a plurality of spherical gratings, and each composite subpixel in the display panel is covered by a corresponding spherical grating. Fig. 2 illustrates the correspondence between a red composite subpixel 410 and a spherical grating 190. The gratings may be composed of a plurality of spherical gratings 190 arranged in an array, and each spherical grating 190 covers a corresponding composite subpixel. Although Fig. 2 shows a spherical grating with a square bottom surface and a circular arc top surface, other configurations of the spherical grating are conceivable. For example, the bottom surface of the spherical grating may be rectangular or hexagonal. For another example, the top surface of the spherical grating may be a circular arc surface or an elliptical arc surface. For another example, the top surface of the spherical grating is directly bonded to the bottom surface. For another example, other planes are connected between the top surface and the bottom surface of the spherical grating; and as shown in Fig. 2, four cross-sectional planes are defined between the circular arc top surface and the square bottom surface of the spherical grating 190.

In some embodiments, the top surface of the spherical grating is provided with another refractive layer with a refractive index different from that of the spherical grating; a surface, facing the spherical grating, of the another refractive layer is bonded with the top surface of the spherical grating in a concave-convex matching manner; and the surface facing away from the spherical grating is a plane, such as a plane parallel to the bottom surface of the spherical grating.

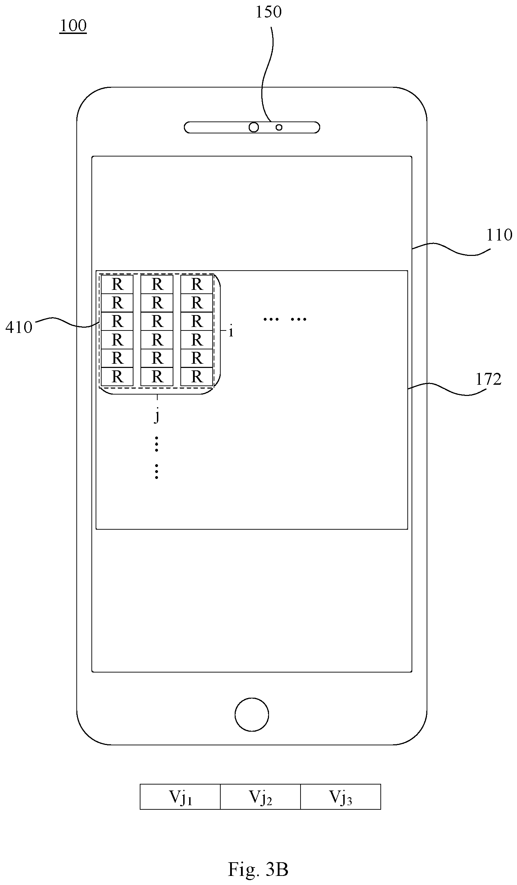

In some embodiments, the 3D display device 100 may be a mobile terminal. Referring to Figs. 3A and 3B, examples of the posture (orientation) of the 3D display device 100 in the form of mobile terminal are shown. As shown in figures, the 3D display device 100 has a first posture (see Fig. 3A) such as a transverse screen display posture and a second posture (see Fig. 3B) such as a vertical screen display posture. The 3D display device 100 may be switched between the first posture and the second posture. The multi-viewpoint 3D display screen 110 defines a first posture playing region 171 adapted to the first posture and a second posture playing region 172 adapted to the second posture. In the illustrated embodiments, the first posture playing region 171 and the second posture playing region 172 have different dimensions. The area of the first posture playing region 171, for example, may account for 80% to 100% of the area of the multi-viewpoint 3D display screen. The area of the second posture playing region 172, for example, may account for 30% to 60% of the area of the multi-viewpoint 3D display screen. When the 3D display device is in the second posture, the second posture playing region 172, for example, may be located in the middle of the multi-viewpoint 3D display screen.

The 3D display device 100 may have i first posture viewpoints Vi corresponding to the first posture, and have j second posture viewpoints Vj corresponding to the second posture. Correspondingly, the homochromatic subpixels in the i×j array of each composite subpixel correspond to i first posture viewpoints of the 3D display device in the first posture and correspond to j second posture viewpoints of the 3D display device in the second posture. In embodiments shown in Figs. 3A and 3B, the 3D display device 100 has six first posture viewpoints Vi1-Vi6, and three second posture viewpoints Vj1-Vj3; and the subpixels of each composite subpixel are arranged in the form of 6×3 array. The figures illustrate only the correspondence between the red subpixels in the i×j array of one red composite subpixel 410 and the viewpoints in two postures. In the illustrated embodiments, i=6 and j=3; and conceivably, i and j are other values equal to or greater than 3, respectively.

In some embodiments, the posture of the 3D display device comprises at least one of: a transverse screen display posture, a vertical screen display posture, and an oblique screen display posture.

In some embodiments, the first posture of the 3D display device comprises: any one, different from the first posture, of the transverse screen display posture, the vertical screen display posture, and the oblique screen display posture; and the second posture of the 3D display device comprises any one of: the transverse screen display posture, the vertical screen display posture, and the oblique screen display posture.

In embodiments shown in Figs. 1A, 2, 3A and 3B, each composite subpixel in the display panel is roughly square; i>j is satisfied in the homochromatic subpixels in the i×j array of each composite subpixel; and an aspect ratio of each subpixel of each composite subpixel is equal to i/j. Conceivably, the composite subpixels and the subpixels may have other suitable shapes. In some embodiments, each composite subpixel is roughly square; i=j is satisfied in the homochromatic subpixels in the i×j array of each composite subpixel; and the aspect ratio of each subpixel is roughly equal to 1. In some embodiments, each composite subpixel is rectangular; each subpixel of each composite subpixel is square or roughly square; and i/j is equal to the aspect ratio of the display panel.

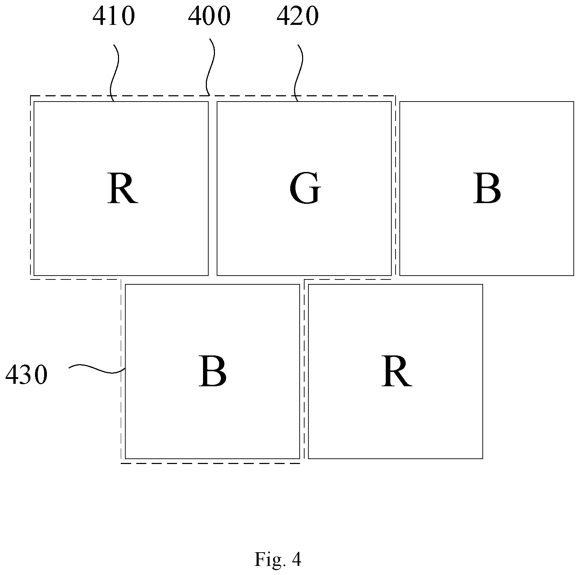

In some embodiments, composite subpixels in different colors are alternately arranged in the display panel; and the plurality of composite subpixels of each composite pixel are arranged in a triangle. As shown in Fig. 4, in the display panel, red composite subpixels 410, green composite subpixels 420, and blue composite subpixels 430 are alternately arranged; and the red composite subpixels 410, the green composite subpixels 420 and the blue composite subpixels 430 of each composite pixel 400 are arranged in a triangle.

In some embodiments, the 3D processing apparatus 130 may optionally comprise a buffer 131, to buffer the received video frames.

Referring to Fig. 1A, the 3D display device 100 may further comprise a processor 120 communicatively connected to the 3D processing apparatus 130 through a video signal interface 140. In some embodiments, the processor 120 is contained in a computer or an intelligent terminal such as a mobile terminal, or serves as a processor unit.

In some embodiments, the video signal interface 140 is an internal interface for connecting the processor 120 with the 3D processing apparatus 130. Such a 3D display device 100, for example, may be a mobile terminal; and the video signal interface 140 may be a mobile industry processor interface (MIPI), a mini-MIPI, a low voltage differential signaling (LVDS) interface, a min-LVDS interface or a Display Port interface.

In some embodiments, as shown in Fig. 1A, the processor 120 of the 3D display device 100 may further comprise a register 121. The register 121 may be configured to temporarily store instructions, data and addresses.

In some embodiments, the posture detection apparatus 180 is communicatively connected with the processor 120. The posture detection apparatus 180 may be a gravity sensor or a gyro sensor.

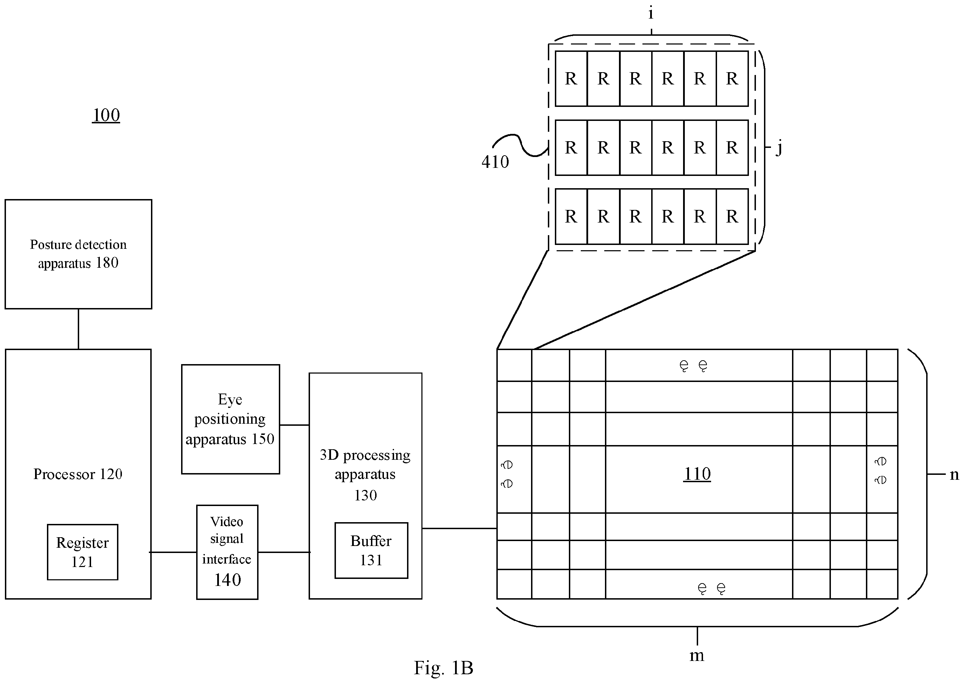

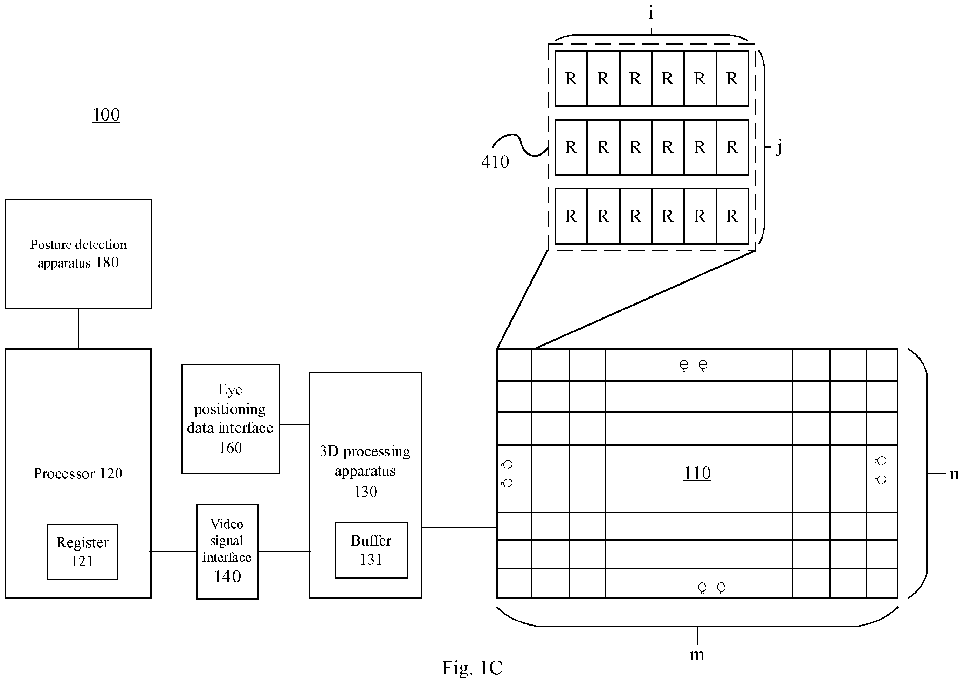

In some embodiments, the 3D display device further comprises an eye positioning apparatus or an eye positioning data interface, configured to acquire eye positioning data. For example, in embodiments shown in Figs. 1B, 3A and 3B, the 3D display device 100 comprises an eye positioning apparatus 150 communicatively connected to the 3D processing apparatus 130, so that the 3D processing apparatus 130 may directly receive eye positioning data. In an embodiment shown in Fig. 1C, an eye positioning apparatus (not shown), for example, may be directly connected to the processor 120; and the 3D processing apparatus 130 acquires eye positioning data from the processor 120 through an eye positioning data interface 160. In other embodiments, the eye positioning apparatus may be simultaneously connected with the processor and the 3D processing apparatus, so that on the one hand, the 3D processing apparatus 130 may directly acquire eye positioning data from the eye positioning apparatus, and on the other hand, other information acquired by the eye positioning apparatus may be processed by the processor.

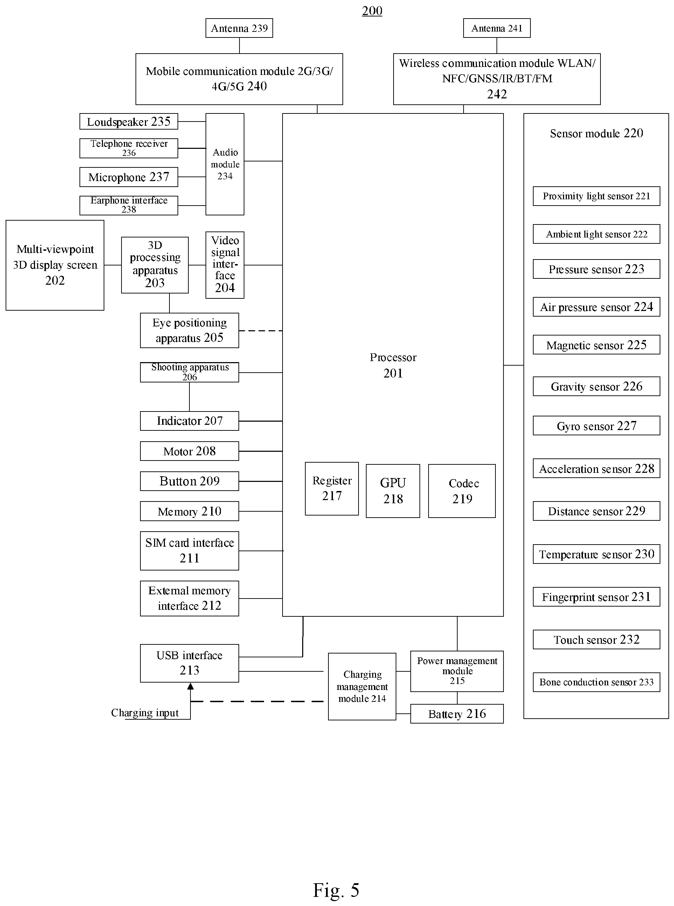

Exemplarily, Fig. 5 shows a structural schematic diagram of hardware of a 3D display device 200 implemented as a mobile terminal such as a smart cell phone, or a tablet personal computer (PC). In the illustrated embodiment, the 3D display device 200 may comprise a processor 201, an external memory interface 211, an (internal) memory 210, a USB interface 213, a charging management module 214, a power management module 215, a battery 216, a mobile communication module 240, a wireless communication module 242, antennas 239 and 241, an audio module 234, a loudspeaker 235, a receiver 233, a microphone 237, an earphone interface 238, a button 209, a motor 208, an indicator 207, a SIM card interface 221, a multi-viewpoint 3D display screen 202, a 3D processing apparatus 203, a 3D signal interface (such as a video signal interface 204), a shooting apparatus 206, an eye positioning apparatus 205, and a sensor module 220.

In some embodiments, the sensor module 220 may comprise a proximity light sensor 221, an ambient light sensor 222, a pressure sensor 223, an air pressure sensor 224, a magnetic sensor 225, a gravity sensor 226, a gyro sensor 227, an acceleration sensor 228, a distance sensor 229, a temperature sensor 230, a fingerprint sensor 231, a touch sensor 232, and a bone conduction sensor 233.

In some embodiments, the processor 201 may comprise one or more processing units. In some embodiments, the processor 201 may comprise one or a combination of at least two of: an application processor (AP), a modem processor, a baseband processor, a graphics processing unit (GPU), an image signal processor (ISP), a controller, a memory, a video codec, a digital signal processor (DSP), a baseband processor, a neural network processor (NPU) and the like. Different processing units may be independent elements, and may also be integrated in one or more processors.

In some embodiments, the processor 201 may comprise one or more interfaces. Interfaces may comprise an integrated circuit (I2C) interface, an integrated circuit built-in audio (I2S) interface, a pulse code modulation (PCM) interface, a universal asynchronous receiver-transmitter (UART) interface, a mobile industry processor interface (MIPI), a general purpose input-output (GPIO) interface, an SIM interface, a USB interface and the like.

The USB interface 213 is an interface compliant with USB standard specifications, and may be a Mini USB interface, a Micro USB interface, a USB Type C interface or the like. The USB interface 213 may be used for connecting with the charger to charge the 3D display device 200, and may also be used for transmitting data between the 3D display device 200 and the peripheral devices. The USB interface 213 may also be used for connecting with earphones and playing audio through the earphones.

A wireless communication function of the 3D display device 200 may be realized by the antennas 241 and 239, the mobile communication module 240, the wireless communication module 242, the modem processor, the baseband processor or the like.

In some embodiments, the antenna 239 of the 3D display device 200 is coupled with the mobile communication module 240, and the antenna 241 is coupled with the wireless communication module 242, so that the 3D display device 200 may communicate with the network and other devices through wireless communication technology.

In some embodiments, the external interface for receiving 3D video signals may comprise the USB interface 213, the mobile communication module 240, the wireless communication module 242, or any combination thereof.

The memory 210 may be used for storing computer-executable program codes, which comprise instructions. The processor 201 implements application of various functions and data processing of the 3D display device 200 by running the instructions stored in the memory 210.

The external memory interface 212 may be used for connecting with an external memory card, such as a Micro SD card, to expand storage capacity of the 3D display device 200. The external memory card communicates with the processor 201 through the external memory interface 212, to realize a data storage function.

In some embodiments, memories of the 3D display device may comprise the (internal) memory 210, an external memory card connected with the external memory interface 212, or a combination thereof.

In embodiments of the present disclosure, the shooting apparatus 206 may capture images or videos.

In some embodiments, the 3D display device 200 realizes a display function through the video signal interface 204, the 3D processing apparatus 203, the multi-viewpoint 3D display screen 202, and the application processor.

In some embodiments, the 3D display device 200 may comprise a GPU 218, for example, be used for processing 3D video images in the processor 201, and be also used for processing 2D video images.

In some embodiments, the 3D display device 200 further comprises a video codec 219 configured to compress or decompress digital videos.

In some embodiments, the video signal interface 204 is configured to output a video frame of a 3D video signal, such as a decompressed 3D video signal, processed by the GPU 218 or the codec 219 or both to the 3D processing apparatus 203.

In some embodiments, the GPU 218 or the codec 219 is integrated with a format adjuster.

The multi-viewpoint 3D display screen 202 is used for displaying 3D images or videos. The multi-viewpoint 3D display screen 202 comprises a display panel and spherical gratings covering the display panel.

In some embodiments, the eye positioning apparatus 205 is communicatively connected to the 3D processing apparatus 203, so that the 3D processing apparatus 203 may render the corresponding subpixels in the composite pixels (composite subpixels) based on the eye positioning data. In some embodiments, the eye positioning apparatus 205 may further be connected to the processor 201, such as be in by-passing connection with the processor 201.

The 3D display device 200 may realize audio functions through the audio module 234, the loudspeaker 235, the receiver 236, the microphone 237, the earphone interface 238, the application processor and the like,

The button 209 comprises a power button, a volume button and the like. The button 209 may be a mechanical button, and may also be a touch button. The 3D display device 200 may receive button input, and generate button signal input related to user settings and function control of the 3D display device 200.

The motor 208 may generate a vibration alert. The motor 208 may be configured to vibrate to prompt an incoming call, and may also be configured to vibrate to feed touch back.

The SIM card interface 211 is configured to connect with a SIM card. In some embodiments, the 3D display device 200 adopts an embedded SIM card (eSIM).

The pressure sensor 223 is configured to sense pressure signals, and may convert the pressure signals into electrical signals.

The air pressure sensor 224 is used for measuring air pressure.

The magnetic sensor 225 comprises a Hall sensor.

The gravity sensor 226, as a posture detection apparatus, can convert motion or gravity into electrical signals, and is configured to measure parameters, such as tilt angle, inertia force, impact and vibration.

The gyro sensor 227, as a posture detection apparatus, is configured to determine a motion posture of the 3D display device 200.

In some embodiments, the posture detection apparatus detects a rotational angular velocity of the 3D display device, and determines the posture change of the 3D display device according to the rotational angular velocity.

The gravity sensor 226 or the gyro sensor 227 may be adopted to detect that the 3D display device 200 is in a first posture or a second posture different from the first posture, or the 3D display device is converted between the first posture and the second posture.

The acceleration sensor 228 may detect acceleration of the 3D display device 200 in various directions (generally three axes).

The distance sensor 229 may be configured to measure a distance.

The temperature sensor 230 may be configured to detect a temperature.

The fingerprint sensor 231 may be configured to collect fingerprints.

The touch sensor 232 may be arranged in the multi-viewpoint 3D display screen 202; and the touch sensor 232 and the multi-viewpoint 3D display screen 202 form a touch screen, also called a "touch panel".

The bone conduction sensor 233 may acquire vibration signals.

The charging management module 214 is configured to receive charging input from the charger.

The power management module 215 is configured to connect the battery 216 and the charging management module 214 to the processor 201. The power management module 215 receives input from at least one of the battery 216 and the charging management module 214, and supplies power to the processor 201, the memory 210, the external memory, the multi-viewpoint 3D display screen 202, the shooting apparatus 206, the wireless communication module 242 and the like. In other embodiments, the power management module 215 and the charging management module 214 may also be arranged in the same device.

A software system of the 3D display device 200 may adopt a hierarchical architecture, an event-driven architecture, a microkernel architecture, a micro-service architecture or a cloud architecture. In embodiments shown in the present disclosure, an Android system with the hierarchical architecture is taken as an example, to illustrate a structure of software of the 3D display device 200. However, conceivably, the embodiments of the present disclosure may be implemented in different software systems, such as an operating system.

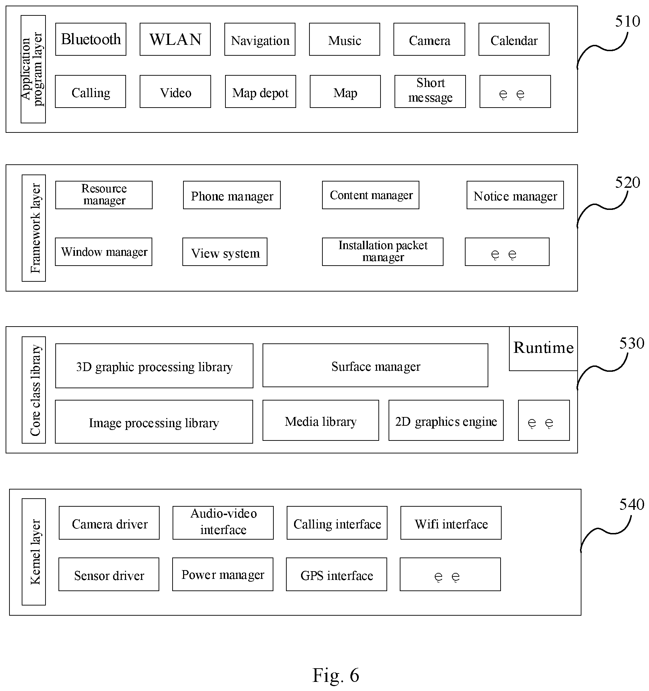

Fig. 6 is a structural schematic diagram of the software of the 3D display device 200 according to an embodiment of the present disclosure. The hierarchical architecture divides software into several layers. The layers communicate with each other through a software interface. In some embodiments, the Android system is divided into four layers, from top to bottom, comprising an application program layer 510, a framework layer 520, core class library and runtime 530, and a kernel layer 540.

The application program layer 510 may comprise a series of application packages. As shown in Fig. 6, the application packages may comprise application programs, such as Bluetooth, WLAN, navigation, music, camera, calendar, call, video, gallery, map and short message.

The framework layer 520 provides an application programming interface (API) and a programming framework for application programs in the application program layer. As shown in Fig. 6, the framework layer 520 may comprise a resource manager, a phone manager, a content manager, a notification manager, a window manager, a view system installation package and manager and the like.

Android Runtime comprises a core library and a virtual machine. The Android Runtime is responsible for scheduling and management of an Android system. The core library comprises two parts: one is performance functions to be called by java language, and the other is the core library of Android.

The application program layer and the framework layer run in the virtual machine. The virtual machine executes java files of the application program layer and the framework layer as binary files. The virtual machine is used for implementing functions of object life cycle management, stack management, thread management, security and exception management, garbage collection and the like.

The core class library may comprise a plurality of functional modules, such as a 3D graphics processing library (such as OpenGL ES), a surface manager, an image processing library, a media library and a graphics engine (such as SGL).

The kernel layer 540 is a layer between hardware and software. The kernel layer at least comprises a camera driver, an audio and video interface, a call interface, a Wifi interface, a sensor driver, a power management and a GPS interface.

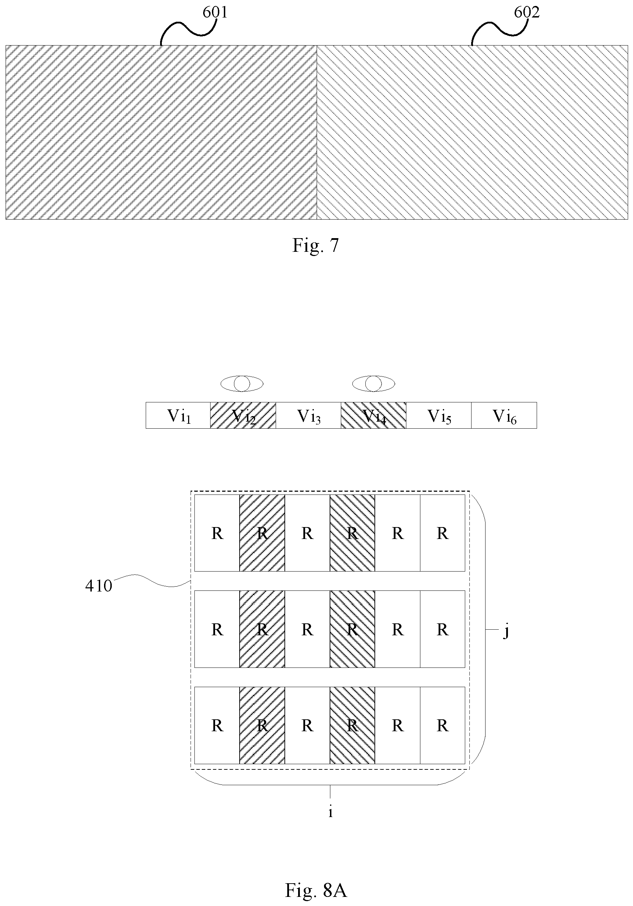

Transmission and display of a 3D video signal in the 3D display device according to embodiments of the present disclosure are described below with reference to Fig. 7. As described above, the 3D display device respectively corresponds to a plurality of viewpoints in different postures. Eyes of the user may see the display of corresponding subpixels in composite subpixels of each composite pixel in the display panel of the display screen at each viewpoint (spatial position) corresponding to each posture. Two different pictures seen by both eyes of the user at different viewpoints form parallax, to composite a 3D picture in the brain.

In some embodiments of the present disclosure, the 3D processing apparatus 130 receives, for example, video frames of a decompressed 3D video signal from the processor 120 through, for example, the video signal interface 140 as the internal interface. Each video frame may contain two images, or contain composite images, or be composed of the above images.

In some embodiments, the two images or the composite images may comprise different types of images and may be in various arrangement forms.

As shown in Fig. 7, each video frame of the 3D video signal contains or is composed of two images 601 and 602 in parallel. In some embodiments, the two images may be a left-eye parallax image and a right-eye parallax image, respectively. In some embodiments, the two images may be a rendered color image and a depth of field (DOF) image, respectively.

In some embodiments, each video frame of the 3D video signal contains interlaced composite images. In some embodiments, the composite images may be interlaced left-eye and right-eye parallax composite images, and interlaced rendered color and DOF composite images.

In some embodiments, after receiving a video frame comprising two images 601 and 602, at least one 3D processing apparatus 130 renders at least one subpixel in each composite subpixel based on one of the two images and at least another subpixel in each composite subpixel based on the other of the two images.

In other embodiments, after receiving a video frame comprising composite images, at least one 3D processing apparatus renders at least two subpixels in each composite subpixel based on the composite images. For example, at least one subpixel is rendered according to a first image (part) in the composite images, and at least another subpixel is rendered according to a second image (part).

As described above, the 3D display device according to embodiments of the present disclosure has a plurality of different postures, and different playing regions formed with adaption to the postures. In some embodiments, the 3D display device has a transverse screen display posture and a vertical screen display posture, and has two playing regions defined with adaption to the two postures. The posture detection apparatus, such as a gravity sensor or a gyro sensor, is configured to detect the posture in which the 3D display device is, or the switch/change of the posture of the 3D display device. The 3D processing apparatus is configured to process video frames of 3D signals, such as 3D video signals, to play 3D images from 3D contents in a first posture playing region and the 3D images from the 3D contents in a second posture playing region.

In some embodiments, the 3D display device 100 is provided with an eye positioning apparatus 150; and the eye positioning apparatus 150 is configured to acquire eye positioning data.

In some embodiments, the eye positioning apparatus is configured to be communicatively connected with the posture detection apparatus to acquire positions of viewpoints, at which the eyes of the user are, in relation to the posture of the 3D display device.

In some embodiments, the eye positioning apparatus is configured to acquire positions of first posture viewpoints at which the eyes of the user are, in response to a signal that the 3D display device is in the first posture.

In some embodiments, the 3D processing apparatus is configured to render relevant subpixels of homochromatic subpixels in the i×j array of each composite subpixel in the first posture playing region according to the 3D images from the 3D contents, based on the first posture viewpoints at which the eyes of the user are.

In some embodiments, the relevant subpixels rendered in the first posture playing region may comprise all subpixels, corresponding to the first posture viewpoints at which the eyes of the user are, in a jth row of subpixels in each composite subpixel.

Referring to Figs. 3A, 3B and 8A, in the illustrated embodiments, the 3D display device 100 may have first posture viewpoints Vi1-Vi6 corresponding to the first posture, and second posture viewpoints Vj1-Vj3 corresponding to the second posture. Each composite pixel in the display panel may comprise red composite subpixels having red subpixels in the i×j array, green composite subpixels having green subpixels in the i×j array, and blue composite subpixels having blue subpixels in the i×j array. In homochromatic subpixels in the i×j array of each composite subpixel, corresponding to the first posture viewpoints Vi1-Vi6 of the first posture, i=6 is satisfied; and corresponding to the second posture viewpoints Vj1-Vj3 of the second posture, j=3 is satisfied. For the sake of clarity, only a correspondence between one red composite subpixel 410 with i=6 and j=3 and each of the first posture viewpoints Vi1-Vi6 and the second posture viewpoints Vj1-Vj3 of the 3D display device 100 is shown in the figures.

In the case that the 3D display device 100 is in the first posture or switched from the second posture to the first posture, when the eye positioning apparatus 150 detects the first posture viewpoints at which both eyes of the user are, for example, a left eye is at the first posture viewpoint Vi2 and a right eye corresponds to the first posture viewpoint Vi4, images of the first posture viewpoints, corresponding to both eyes of the user, are generated based on the video frames of the 3D video signals; and all red subpixels, corresponding to the first posture viewpoint Vi2, in a jth row of red subpixels in the red composite subpixel 410 and all red subpixels, corresponding to the first posture viewpoint Vi4, in the jth row of red subpixels are rendered in the first playing region 171.

In some embodiments, the relevant subpixels rendered in the first posture playing region may comprise one subpixel, corresponding to the first posture viewpoints at which the eyes of the user are, in the jth row of subpixels in each composite subpixel. For example, one subpixel, corresponding to the first posture viewpoint at which the left eye of the user is, in the jth row of subpixels, and one subpixel, corresponding to the first posture viewpoint at which the right eye of the user is, in the jth row of subpixels may be rendered.

In some embodiments, when the 3D display device is in the first posture, in response to a signal that the 3D display device is in the first posture, the eye positioning apparatus acquires the first posture viewpoints at which the eyes of the user are, and further acquires the second posture viewpoints at which the eyes of the user are. The relevant subpixels rendered in the first posture playing region comprise a subpixel corresponding to an intersection between the first posture viewpoint, at which the eyes of the user are, in the jth row of subpixels of the homochromatic subpixels in the i×j array of each composite subpixel, and the second posture viewpoint, at which the eyes of the user are, in an ith row of subpixels.

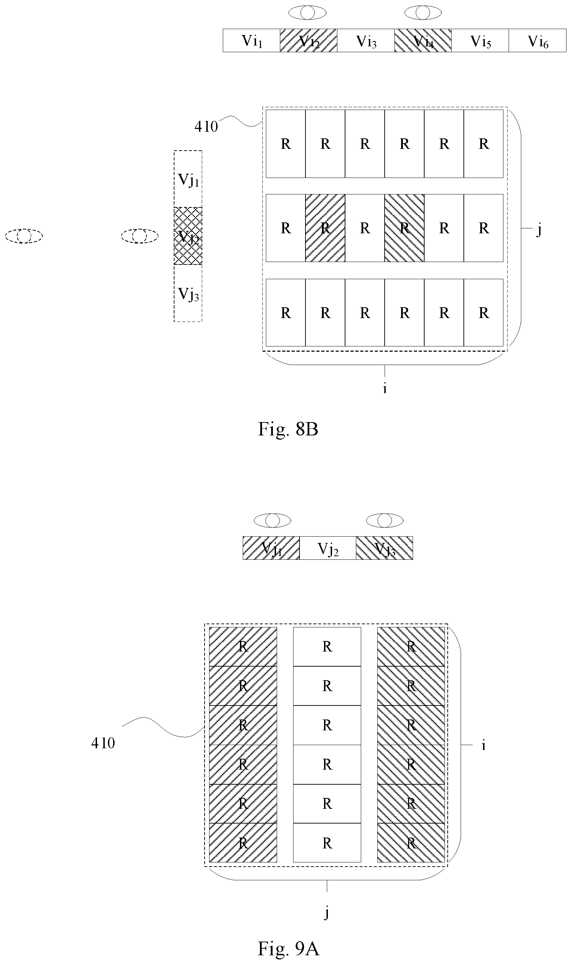

Referring to Figs. 3A, 3B and 8B, unlike the embodiment shown in Fig. 8A, when the 3D display device 100 is in the first posture or switched from the second posture to the first posture, the eye positioning apparatus 150 detects the first posture viewpoints at which both eyes of the user are, for example, the left eye corresponds to the first posture viewpoint Vi2 and the right eye corresponds to the first posture viewpoint Vi4, and further detects the second posture viewpoints at which both eyes of the user are, for example, the left eye and the right eye correspond to the same second posture viewpoint Vj2. Based on the video frames of the 3D video signals, the images of the first posture viewpoints corresponding to both eyes of the user are generated; and a red subpixel corresponding to the intersection between the first posture viewpoint Vi2, at which the eyes of the user are, in a jth row of red subpixels in the red composite subpixel 410, and the second posture viewpoint Vj2, at which the eyes of the user are, in an ith row of red subpixels, as well as a red subpixel corresponding to an intersection between the first posture viewpoint Vi4, at which the eyes of the user are, in the jth row of red subpixels, and the second posture viewpoint Vj2, at which the eyes of the user are, in the ith row of red subpixels, are rendered in the first playing region 171.

In some embodiments, the eye positioning apparatus is configured to acquire positions of second posture viewpoints at which the eyes of the user are, in response to a signal that the 3D display device is in the second posture.

In some embodiments, the 3D processing apparatus is configured to render relevant subpixels of homochromatic subpixels in the i×j array of each composite subpixel in the second posture playing region according to the 3D images from the 3D contents, based on the second posture viewpoints at which the eyes of the user are.

In some embodiments, the relevant subpixels rendered in the second posture playing region comprise all subpixels, corresponding to the second posture viewpoints at which the eyes of the user are, in the ith row of subpixels in each composite subpixel.

Referring to Figs. 3A, 3B and 9A, in the illustrated embodiments, the 3D display device 100 may have first posture viewpoints Vi1-Vi6 corresponding to the first posture, and second posture viewpoints Vj1-Vj3 corresponding to the second posture. Each composite pixel in the display panel may comprise red composite subpixels having red subpixels in the i×j array, green composite subpixels having green subpixels in the i×j array, and blue composite subpixels having blue subpixels in the i×j array. In homochromatic subpixels in the i×j array of each composite subpixel, corresponding to the first posture viewpoints Vi1-Vi6 of the first posture, i=6 is satisfied; and corresponding to the second posture viewpoints Vj1-Vj3 of the second posture, j=3 is satisfied. For the sake of clarity, only a correspondence between one red composite subpixel 410 with i=6 and j=3 and each of the first posture viewpoints Vi1-Vi6 and the second posture viewpoints Vj 1-Vj3 of the 3D display device 100 is shown in the figures.

When the 3D display device 100 is in the second posture or switched from the first posture to the second posture, the eye positioning apparatus 150 detects the second posture viewpoints corresponding to both eyes of the user, for example, the left eye corresponds to the second posture viewpoint Vj1, and the right eye corresponds to the second posture viewpoint Vj3. Based on the video frames of the 3D video signals, images of the second posture viewpoints corresponding to both eyes of the user are generated; and all red subpixels, corresponding to the viewpoint Vj 1, in the ith row of red subpixels in the red composite subpixel 410, and all red subpixels, corresponding to the viewpoint Vj3, in the ith row of red subpixels, are rendered in the second playing region 172.

In some embodiments, the relevant subpixels rendered in the second posture playing region comprise one subpixel, corresponding to the second posture viewpoints at which the eyes of the user are, in the ith row of subpixels in each composite subpixel. For example, one subpixel, corresponding to the second posture viewpoint at which the left eye of the user is, in the ith row of subpixels, and one subpixel, corresponding to the second posture viewpoint at which the right eye of the user is, in the ith row of subpixels may be rendered.

In some embodiments, when the 3D display device is in the second posture, in response to a signal that the 3D display device is in the second posture, the eye positioning apparatus acquires positions of the second posture viewpoints at which the eyes of the user are, and acquires positions of the first posture viewpoints at which the eyes of the user are. The relevant subpixels rendered in the second posture playing region comprise a subpixel corresponding to an intersection between the second posture viewpoint, at which the eyes of the user are, in the ith row of subpixels of the homochromatic subpixels in the i×j array of each composite subpixel, and the first posture viewpoint, at which the eyes of the user are, in the jth row of subpixels.

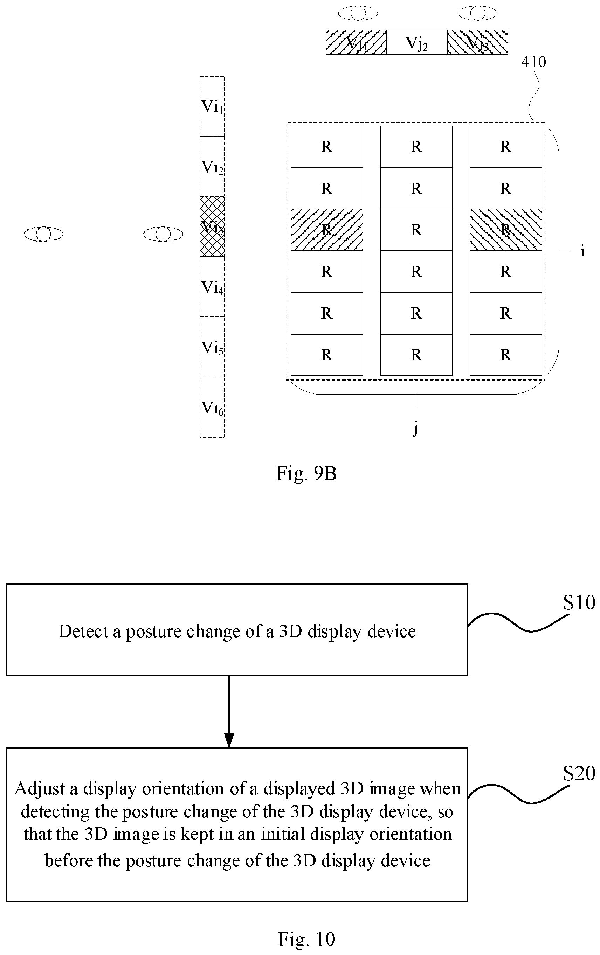

Referring to Figs. 3A, 3B and 9B, in the illustrated embodiments, unlike the embodiment shown in Fig. 9A, when the 3D display device 100 is in the second posture or switched from the first posture to the second posture, the eye positioning apparatus 150 detects the second posture viewpoints corresponding to both eyes of the user, for example, the left eye corresponds to the second posture viewpoint Vj 1 and the right eye corresponds to the second posture viewpoint Vj3, and detects the first posture viewpoints corresponding to both eyes of the user, for example, the left eye and the right eye correspond to the same second posture viewpoint Vi3. Based on the video frames of the 3D video signals, the images of the second posture viewpoints corresponding to both eyes of the user are generated; and a red subpixel corresponding to an intersection between the second posture viewpoint Vj 1, at which the eyes of the user are, in the ith row of red subpixels, and the first posture viewpoint Vi3, at which the eyes of the user are, in the jth row of red subpixels, as well as a red subpixel corresponding to an intersection between the second posture viewpoint Vi3, at which the eyes of the user are, in the ith row of red subpixels, and the first posture viewpoint Vi3, at which the eyes of the user are, in the jth row of red subpixels, are rendered in the second playing region 172.

In some embodiments, the 3D display device 100 further comprises a format adjuster (not shown), configured to adjust the format of the 3D contents, for example, preprocess the video frames of the 3D video signals, to be suitable for playing the 3D images in the first posture playing region and the second posture playing region. For example, when the resolution of the 3D contents is inconsistent with a display resolution of the first posture playing region or the second posture playing region, the format adjuster preprocesses the resolution of the 3D contents, to adapt to the display resolution of the first posture playing region or the second posture playing region.

A method for switching the display of 3D images in the 3D display device is provided according to embodiments of the present disclosure. A method for realizing 3D image display in the 3D display device comprises:
detecting a posture of the 3D display device, comprising, detecting a posture in which the 3D display device is, or detecting a posture change of the 3D display device, or detecting the both; and
adjusting a display orientation of a displayed 3D image based on the posture in which the 3D display device is or the change of posture, so that the 3D image is kept in an initial display orientation before the posture change of the 3D display device.

In some embodiments, as shown in Fig. 10, the method for realizing 3D image display comprises:
S10, detecting a posture change of the 3D display device; and
S20, adjusting a display orientation of a displayed 3D image when detecting the posture change of the 3D display device, so that the 3D image is kept in an initial display orientation before the posture change of the 3D display device.

In some embodiments, the step S20 may comprise: when detecting the posture change of the 3D display device, adjusting the display of a 3D image so that a display orientation of the 3D image is kept in an initial display orientation before the posture change of the 3D display device.

In some embodiments, detecting the posture change of the 3D display device may be completed by the posture detection apparatus; and adjusting the display of a 3D image so that a display orientation of the 3D image is kept in an initial display orientation before the posture change of the 3D display device may be completed by the 3D processing apparatus.

In some embodiments, detecting a posture change of the 3D display device comprises: detecting a rotational angular velocity of the 3D display device, and determining the posture change of the 3D display device according to the rotational angular velocity.

In some embodiments, adjusting a display orientation of a 3D image comprises: rotating the display orientation of the 3D image in a plane, in which the 3D image is located, so that the 3D image is kept in the initial display orientation before the posture change of the 3D display device.

In some embodiments, the posture of the 3D display device comprises at least one of: a transverse screen display posture, a vertical screen display posture, and an oblique screen display posture.

In some embodiments, the first posture of the 3D display device before the posture change comprises any one of: the transverse screen display posture, the vertical screen display posture, and the oblique screen display posture; and the second posture of the 3D display device after the posture change comprises: any one, different from the first posture, of the transverse screen display posture, the vertical screen display posture, and the oblique screen display posture.

In some embodiments, adjusting a display orientation of a 3D image comprises: rotating the 3D image to keep the 3D image in the initial display orientation corresponding to the first posture. Thus, for the user, no matter how to adjust the posture of the 3D display device, the display orientations of the seen 3D images are consistent.

In some embodiments, when any one of the first posture and the second posture is the oblique screen display posture, adjusting a display orientation of a 3D image further comprises: displaying the 3D image in a full screen display mode.

In some embodiments, adjusting a display orientation of a 3D image comprises: rotating the display orientation of the 3D image in a plane, in which the 3D image is located, so that the 3D image is kept within an initial display orientation range, wherein the initial display orientation range comprises the initial display orientation. Thus, the display orientation of the displayed 3D image may be fine-adjusted or adjusted according to motion of the user, to adapt to the motion of the user.

In some embodiments, the method for realizing 3D image display further comprises: adjusting the display orientation of the 3D image according to a viewing orientation of the user, so that the display orientation of the 3D image coincides with the viewing orientation of the user. The viewing orientation of the user may comprise any one of a transverse viewing orientation, a vertical viewing orientation, and an oblique viewing orientation.

In some embodiments, eye positioning may further be performed for the user; and the viewing orientation of the user is determined according to the obtained eye positioning data. The above, for example, may be implemented by an eye positioning apparatus.

In some embodiments, adjusting the display orientation of the 3D image comprises: based on the adjusted display orientation (or the display orientation after the posture change of the 3D display device) of the 3D image, rendering composite pixels in a multi-viewpoint 3D display screen of the 3D display device. For example, based on a correspondence between subpixels of each composite subpixel of each composite pixel in the multi-viewpoint 3D display screen and viewpoints after the posture change of the 3D display device, the subpixels corresponding to the viewpoints determined by the eye positioning data are rendered according to a to-be-displayed 3D image.

The adjusting of the display orientation of the 3D image and the rendering of the subpixels may be completed by the 3D processing apparatus.

In some embodiments, the method for realizing 3D image display comprises:
acquiring 3D signals; and
switching and playing the 3D images from the 3D contents in the 3D display device, in response to the posture change of the 3D display device.

In some embodiments, switching and playing the 3D images from the 3D contents in the 3D display device in response to the posture change of the 3D display device comprises: playing the 3D images from the 3D contents in the first posture playing region defined by the multi-viewpoint 3D display screen, in response to a signal that the 3D display device is changed to the first posture or is in the first posture.

In some embodiments, switching and playing the 3D images from the 3D contents in the 3D display device in response to the posture change of the 3D display device comprises: playing the 3D images from the 3D contents in the second posture playing region defined by the multi-viewpoint 3D display screen, in response to a signal that the 3D display device is changed to the second posture or is in the second posture.

In some embodiments, the first posture is a transverse posture of the display device; and the second posture is a vertical posture of the display device.

In some embodiments, the 3D contents comprise 3D videos, such as video frames of the 3D videos.

In some embodiments, a method for switching the display of the 3D images in the 3D display device further comprises: acquiring real-time eye positioning data in relation to the posture of the 3D display device.

In some embodiments, acquiring real-time eye positioning data in relation to the posture of the 3D display device comprises: in response to the signal that the 3D display device is in the first posture, acquiring positions of first posture viewpoints at which the eyes of the user are.

In some embodiments, playing the 3D images from the 3D contents in the first posture playing region defined by the multi-viewpoint 3D display screen comprises: rendering relevant subpixels of homochromatic subpixels in the i×j array of each composite subpixel in the first posture playing region according to the 3D images from the 3D contents, based on positions of the first posture viewpoints at which the eyes of the user are.

In some embodiments, the relevant subpixels rendered in the first posture playing region comprise at least one subpixel, corresponding to the first posture viewpoints at which the eyes of the user are, in the jth row of subpixels in each composite subpixel.

In some embodiments, acquiring real-time eye positioning data in relation to the posture of the 3D display device comprises: acquiring positions of second posture viewpoints at which the eyes of the user are, in response to the signal that the 3D display device is in the second posture.

In some embodiments, playing the 3D images from the 3D contents in the second posture playing region defined by the multi-viewpoint 3D display screen comprises: rendering relevant subpixels of homochromatic subpixels in the i×j array of each composite subpixel in the second posture playing region according to the 3D images from the 3D contents, based on positions of the second posture viewpoints at which the eyes of the user are.

In some embodiments, the relevant subpixels rendered in the second posture playing region comprise at least one subpixel, corresponding to the second posture viewpoints at which the eyes of the user are, in the ith row of subpixels in each composite subpixel.

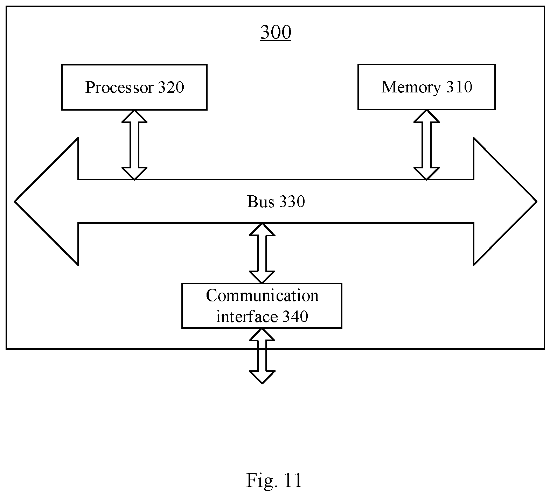

Embodiments of the present disclosure provide a 3D display device 300; and referring to Fig. 11, the 3D display device 300 comprises a processor 320 and a memory 310. The 3D display device 300 may further comprise a communication interface 340 and a bus 330. The processor 320, the communication interface 340, and the memory 310 communicate with each other through the bus 330. The communication interface 340 may be configured to transmit information. The processor 320 may call logic instructions in the memory 310, to implement the method for switching the display of 3D images in the 3D display device of the above embodiment. The logic instructions in the memory 310 may be implemented in the form of software functional units, and may be stored in a computer-readable storage medium when being sold or used as an independent product.

The computer-readable storage medium provided by the embodiments of the present disclosure stores the computer-executable instructions; and the computer-executable instructions are configured to implement the method for realizing 3D image display.

The computer program product provided by the embodiments of the present disclosure comprises computer programs stored on the computer-readable storage medium; the computer programs comprise program instructions; and when the program instructions are executed by a computer, the computer is allowed to implement the above method for realizing 3D image display.

Technical solutions of embodiments of the present disclosure may be reflected in the form of a software product, which is stored in a storage medium and comprises one or more instructions for enabling computer equipment (which may be a personal computer, a server, network equipment or the like) to perform all or some steps of the method in embodiments of the present disclosure. The storage medium may be a non-transient storage medium, comprising a plurality of media capable of storing program codes, such as a U disk, a mobile hard disk, a read-only memory (ROM), a RAM, a diskette or an optical disk, and may also be a transient storage medium.

The above description and drawings sufficiently illustrate the embodiments of the present disclosure to enable those skilled in the art to practice them. Other embodiments may comprise structural, logical, electrical, process, and other changes. Unless expressly required, individual components and functions are optional and the order of operations may be changed. Parts and features of some embodiments may be included in or substituted for parts and features of other embodiments. The scope of the disclosed embodiments includes the full scope of the claims, and all available equivalents of the claims. The terms used in the present application are used to describe the embodiments only and not to limit the claims. When used in the present application, the terms "comprise", etc. refer to the presence of at least one of stated features, but does not preclude the presence of other features.

In the embodiments disclosed herein, the disclosed method and product (including, but not limited to the apparatus and the device) may be realized in other ways. For example, the device embodiments described above are merely schematic. For example, the division of the units may be only a logical functional division, and may be an additional division manner in actual realization. For example, multiple units or components may be combined or integrated into another system, or some features may be ignored or not executed. In addition, the displayed or discussed mutual coupling or direct coupling or communication connection may be indirect coupling or communication connection through some interfaces, devices or units, and may be electrical, mechanical or other forms. The units described as separate components may or may not be physically separated, and the components shown as the units may or may not be physical units. The present embodiments may be implemented by selecting some or all of the units according to actual needs. In addition, each functional unit in the embodiments of the present disclosure may be integrated into one processing unit, or each unit may exist physically alone, or two or more units may be integrated into one unit.

The flow charts and block diagrams in the drawings show architectures, functions and operations possibly implemented by systems, methods and computer program products according to the embodiments of the present disclosure. In this regard, each block in the flow charts or block diagrams may represent a part of a module, program segment or code, and part of the module, program segment or code contains one or more executable instructions for implementing specified logical functions. In some alternative implementations, the functions marked in the blocks may also occur in an order different from the order marked in the drawings. For example, two continuous blocks may actually be executed substantially concurrently, or sometimes may be executed in a reverse order, depending on the functions involved. In the descriptions corresponding to the flow charts and the block diagrams in the drawings, operations or steps corresponding to different blocks may also occur in different orders than those disclosed, and sometimes there is no specific order between different operations or steps. For example, two continuous operations or steps may be actually performed substantially concurrently, or sometimes may be performed in the reverse order, depending on the functions involved. Each block in the block diagrams and/or flow charts, and combinations of the blocks in the block diagrams and/or flow charts, can be implemented by special hardware-based systems that perform specified functions or actions, or implemented by combinations of special hardware and computer instructions.

## Claims

1. A method for realizing 3D image display, comprising:
detecting a posture change of a 3D display device, wherein the 3D display device comprises a multi-viewpoint 3D display screen, the multi-viewpoint 3D display screen comprises a plurality of composite pixels and a plurality of spherical gratings covering the plurality of composite pixels, each composite pixel of the plurality of composite pixels comprises a plurality of composite subpixels, and each composite subpixel of the plurality of composite subpixels comprises a plurality of subpixels corresponding to a plurality of viewpoints; and
adjusting a display orientation of a displayed 3D image when detecting that a posture of the 3D display device changes, so that the 3D image is kept in an initial display orientation before a posture the 3D display device changes.

2. The method according to claim 1, wherein
detecting a posture change of a 3D display device comprises:
detecting a rotational angular velocity of the 3D display device, and determining a posture change of the 3D display device according to the rotational angular velocity;
adjusting a display orientation of the 3D image comprises:
rotating a display orientation of the 3D image in a plane in which the 3D image is located, so that the 3D image is kept in an initial display orientation before a posture of the 3D display device changes.

3. The method according to claim 2, wherein a posture of the 3D display device comprises at least one of:
a transverse screen display posture, a vertical screen display posture, and an oblique screen display posture.

4. The method according to claim 3, wherein
a first posture of the 3D display device before a posture change comprises: any one of a transverse screen display posture, a vertical screen display posture, and an oblique screen display posture;
a second posture of the 3D display device after a posture change comprises: any one, different from the first posture, of a transverse screen display posture, a vertical screen display posture, and an oblique screen display posture;
adjusting a display orientation of the 3D image comprises: rotating the 3D image so that the 3D image is kept in an initial display orientation corresponding to the first posture.

5. The method according to claim 4, wherein when any one of the first posture and the second posture is an oblique screen display posture, adjusting a display orientation of the 3D image further comprises:
displaying the 3D image in a full screen display mode.

6. The method according to claim 1, wherein adjusting a display orientation of the 3D image comprises:
rotating a display orientation of the 3D image in a plane in which the 3D image is located, so that the 3D image is kept within an initial display orientation range;
wherein the initial display orientation range comprises the initial display orientation.

7. The method according to any one of claims 1-6, further comprising:
adjusting a display orientation of the 3D image according to a viewing orientation of a user, so that a display orientation of the 3D image coincides with a viewing orientation of the user.

8. The method according to claim 7, wherein
a viewing orientation of the user comprises: any one of a transverse viewing orientation, a vertical viewing orientation, and an oblique viewing orientation;
the method further comprises: performing eye positioning for the user, and determining a viewing orientation of the user according to obtained eye positioning data.

9. The method according to any one of claims 1-8, wherein adjusting a display orientation of the 3D image comprises:
rendering corresponding subpixels in composite subpixels in the multi-viewpoint 3D display screen based on an adjusted display orientation of the 3D image.

10. The method according to claim 9, wherein rendering corresponding subpixels in composite subpixels in the multi-viewpoint 3D display screen comprises:
rendering subpixels, corresponding to the viewpoints, in each composite subpixel based on viewpoints corresponding to subpixels in each composite subpixel after a posture change of a 3D display device.

11. The method according to any one of claims 1-8, wherein the plurality of subpixels in each composite subpixel are in an i×j array, wherein
subpixels in the i×j array of each composite subpixel correspond to i viewpoints before a posture change of the 3D display device; or
subpixels in the i×j array of each composite subpixel correspond to j viewpoints after a posture change of the 3D display device.

12. A 3D display device, comprising:
a processor; and
a memory storing program instructions;
wherein the processor is configured to implement the method of any one of claims 1-11 when executing the program instructions.

13. A 3D display device, comprising:
a multi-viewpoint 3D display screen, comprising a plurality of composite pixels and a plurality of spherical gratings covering the plurality of composite pixels, wherein each composite pixel of the plurality of composite pixels comprises a plurality of composite subpixels, and each composite subpixel of the plurality of composite subpixels comprises a plurality of subpixels corresponding to a plurality of viewpoints;
a posture detection apparatus, configured to detect a posture change of the 3D display device; and
a 3D processing apparatus, configured to adjust a display orientation of a displayed 3D image based on a detected posture change of the 3D display device, so that the 3D image is kept in an initial display orientation before a posture change of the 3D display device.

14. The 3D display device according to claim 13, wherein the posture detection apparatus is configured to detect a rotational angular velocity of the 3D display device, and determine a posture change of the 3D display device according to the rotational angular velocity;
the 3D processing apparatus is configured to rotate a display orientation of the 3D image in a plane in which the 3D image is located, so that the 3D image is kept in an initial display orientation before a posture of the 3D display device changes.

15. The 3D display device according to claim 14, wherein a posture of the 3D display device comprises at least one of: a transverse screen display posture, a vertical screen display posture, and an oblique screen display posture.

16. The 3D display device according to claim 15, wherein
a first posture of the 3D display device before a posture change comprises: any one of a transverse screen display posture, a vertical screen display posture, and an oblique screen display posture;
a second posture of the 3D display device after a posture change comprises: any one, different from the first posture, of a transverse screen display posture, a vertical screen display posture, and an oblique screen display posture;
the 3D processing apparatus is configured to rotate the 3D image so that the 3D image is kept in an initial display orientation corresponding to the first posture.

17. The 3D display device according to claim 16, wherein the 3D processing apparatus is configured to display the 3D image in a full screen display mode when any one of the first posture and the second posture is an oblique screen display posture.

18. The 3D display device according to claim 14, wherein the 3D processing apparatus is configured to rotate a display orientation of the 3D image in a plane in which the 3D image is located, so that the 3D image is kept within an initial display orientation range, wherein the initial display orientation range comprises the initial display orientation.

19. The 3D display device according to any one of claims 13-18, wherein the 3D processing apparatus is configured to adjust a display orientation of the 3D image according to a viewing orientation of a user, so that a display orientation of the 3D image coincides with a viewing orientation of the user.

20. The 3D display device according to claim 19, wherein a viewing orientation of the user comprises: any one of a transverse viewing orientation, a vertical viewing orientation, and an oblique viewing orientation;
the 3D display device further comprises an eye positioning apparatus or an eye positioning data interface, configured to acquire eye positioning data;
the 3D processing apparatus is configured to determine a viewing orientation of the user according to obtained eye positioning data.

21. The 3D display device according to any one of claims 13-20, wherein the 3D processing apparatus is configured to render composite pixels in a multi-viewpoint 3D display screen of the 3D display device based on an adjusted display orientation of the 3D image.

22. The 3D display device according to claim 21, wherein the 3D processing apparatus is configured to render subpixels, corresponding to viewpoints, in composite subpixels contained in the multi-viewpoint 3D display screen based on viewpoints corresponding to subpixels in each composite subpixel after a posture change of the 3D display device.

23. The 3D display device according to any one of claims 13-20, wherein the plurality of subpixels in each composite subpixel are in an i×j array, wherein
subpixels in the i×j array of each composite subpixel correspond to i viewpoints before a posture of the 3D display device changes; or
subpixels in the i×j array of each composite subpixel correspond to j viewpoints after a posture of the 3D display device changes.

24. A computer-readable storage medium, storing computer-executable instructions, wherein the computer-executable instructions are configured to implement the method of any one of claims 1-11.

25. A computer program product, comprising computer programs stored on a computer-readable storage medium, wherein the computer programs comprise program instructions, and make a computer implements the method of any one of claims 1-11 when the program instructions are executed by the computer.
